# EUROPEAN PATENT SPECIFICATION

(11) **EP 2 207 053 B1**
(45) Date of publication and mention of the grant of the patent: **20.03.2013**
(21) Application number: 09000114.0
(22) Date of filing: 07.01.2009
(51) Int. Cl.: G02B 6/38, G02B 6/40

(54) **Multiple optical fiber connector**
Vieladriger optischer Steckverbinder
Connecteur à fibres optiques multifilaires

(43) Date of publication of application: 14.07.2010
(73) Proprietor: The Furukawa Electric Co., Ltd., Chiyoda-ku Tokyo 100-8322 (JP)
(72) Inventor: Naoya, Nishimura The Furukawa Electric Co., Ltd., Tokyo 100-8322 (JP); Miyazaki, Hideki The Furukawa Electric Co., Ltd., Tokyo 100-8322 (JP)
(74) Representative: Grünberg, Thomas

(56) References cited:
- EP-A- 1 016 885
- WO-A-2006/029299
- US-A1- 2005 069 264

## Description

### Field of the invention

The present invention relates to an optical connector, in particular to an optical connector for connecting sets of multiple optical fibers.

### Background of the invention

There is proposed that one optical fiber and the other optical fiber are connected with the use of a pair of ferrules and a elastic sleeve. When one optical fiber is connected to the other optical fiber, one ferrule is attached to the end portion of the one optical fiber, the other ferrule is attached to the end portion of the other optical fiber, and one ferrule is fit into the other ferrule so as to connect one optical fiber to the other optical fiber (for example, refer to Japanese Patent Application Publication No. 63-231408).

When sets of multiple optical fiber are connected, each end portion of the optical fiber in each of the set of multiple optical fibers is fixed to the ferrule, and one ferrule is butted with the other ferrule so that each end portion of the optical fiber in one set of multiple optical fibers is connected to corresponding each end portion of the optical fiber in the other set of multiple optical fibers. It is necessary to precisely position the sets of multiple optical fibers and to be connected.

The state of the art document WO 2006/029299 describes an optical connector system including reduced-size MT-style ferrules.

The optical connector of the set of multiple optical fibers has a plug member and a ferrule to be secured within the plug member. The ferrule is required to be simply and surely secured within the plug member with high precision.

One of the object of the invention is therefore to provide an optical connector enabling to simply and surely secure the ferrule within the plug member with high precision, in order to solve the above described problem.

### Summary of the invention

In order to solve the above described problems, there is proposed an optical connector according to claim 1.

In the optical connector, a direction of forming the multiple optical fibers guiding groove preferably slants to a longitudinal direction of the receiving hole.

### Brief description of the drawings

Fig. 1 is a disassembled perspective view to depict a favorable embodiment of the optical connector of the invention.
Fig. 2 is an assembled perspective view of the ferrule and the spacer of the optical connector depicted in Fig. 1.
Fig. 3 is a perspective view to show the side of the second flat face portion of the ferrule.
Fig. 4 is a plan view of the ferrule.
Fig. 5 is a side view of the ferrule.
Fig. 6 is a side view and a cross sectional view of the ferrule.
Fig. 7 is a perspective view to depict the spacer and the set of multiple optical fibers.
Fig. 8 is a plan view of the spacer.
Fig. 9 is a side view of the spacer.
Fig. 10 is a cross sectional view of the spacer.
Fig. 11 is another cross sectional view of the spacer.
Fig. 12 is a view to show the state in which the set of multiple optical fibers is butted to the other set of multiple optical fibers and positioned thereto.
Fig. 13 is a view to show a comparative embodiment.

### Best mode for carrying out the invention

Favorable embodiments of the invention are described in detail with reference to the drawings hereunder.

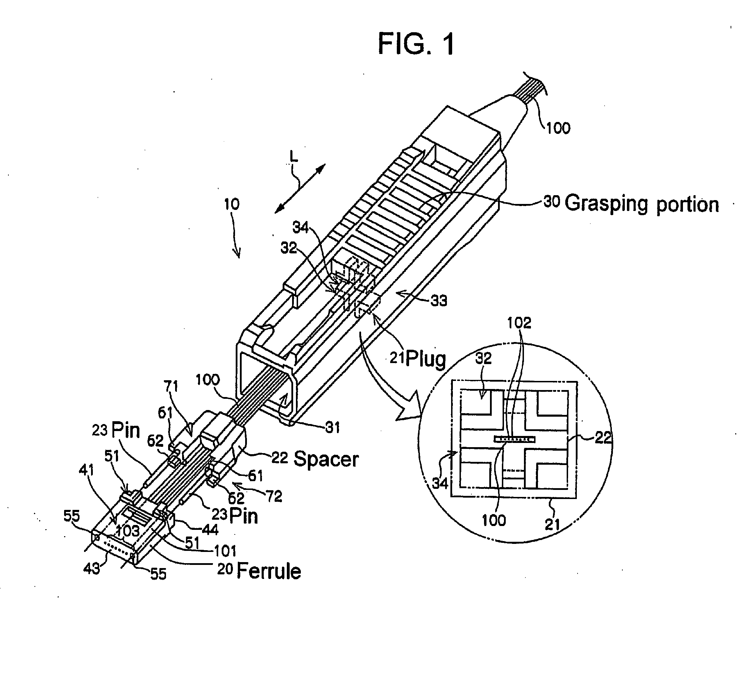

Fig. 1 is a perspective view to depict a favorable embodiment of the optical connector of the invention.

The optical connector 10 as depicted in Fig. 1 is an optical connector for connecting one set of the multiple optical fibers to another set of the multiple optical fibers. The optical connector 10 includes a ferrule 20, a plug member 21 and a spacer 22. The ferrule 20 holds end portions 103 of the set of multiple optical fibers 100 to be connected. The spacer 22 and the ferrule 20 are received and secured within the plug member 21. The ferrule 20, the plug member 21 and the spacer 22 are molded from plastic material.

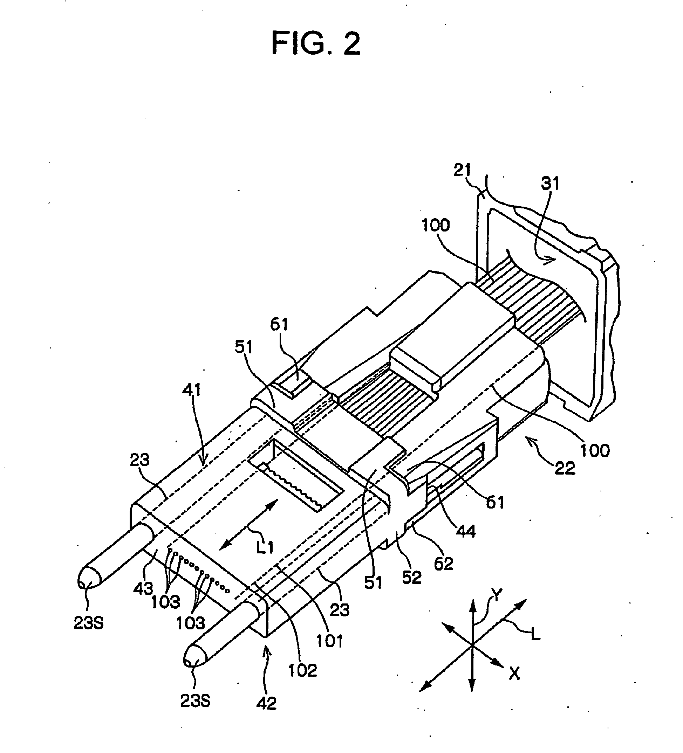

The spacer 22 has two pins 23, 23 for guiding. The pins 23, 23 are inserted into respective holes 55, 55 for guiding formed in the ferrule 20 so that the spacer 22 is integrally secured with the ferrule 20. Fig. 1 shows a condition in which the ferrule 20, the plug member 21 and the spacer 22 are disassembled. Fig. 2 shows a condition in which the ferrule 20 and the spacer 22 are already assembled, and the assembled ferrule 20 and spacer 22 are to be received in the plug member 21.

The structure of the plug member 21 is described with reference to Fig. 1.

The plug member 21 is a member having a hollow portion therein, and the cross section thereof perpendicular to a longitudinal direction L has a rectangular shape. The plug member 21 includes a grasping portion 30 and the hollow portion 31 having the rectangular cross section. The hollow portion 31 is formed along the longitudinal direction L of the plug member 21. A holding portion 32 is secured to the inside of an intermediate portion 33 of the hollow portion 31. The holding portion 32 is a member to position the spacer 22 and hold it thereto. The holding portion 32 has a cross-like fitting groove 34 into which the spacer 22 is fit and held therein.

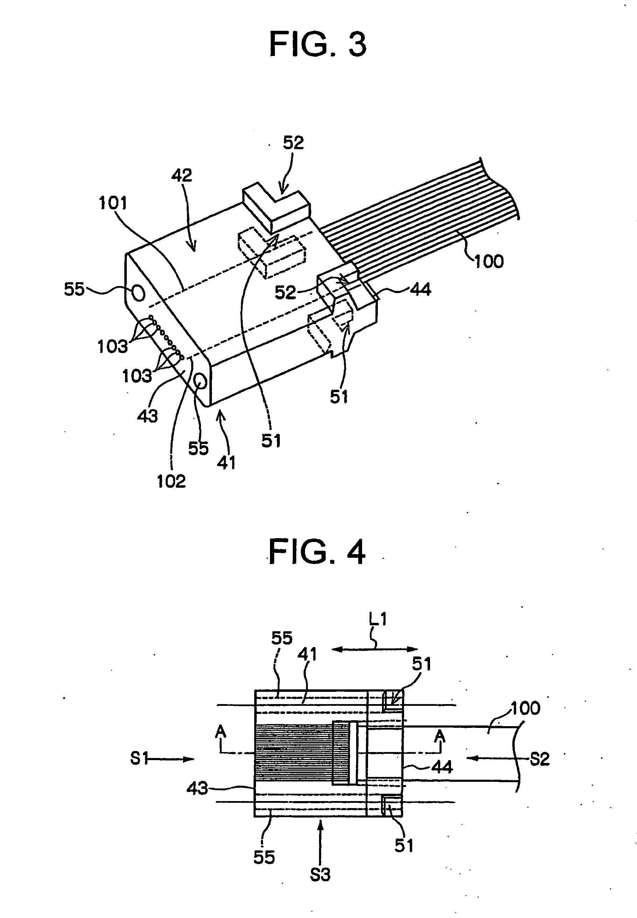

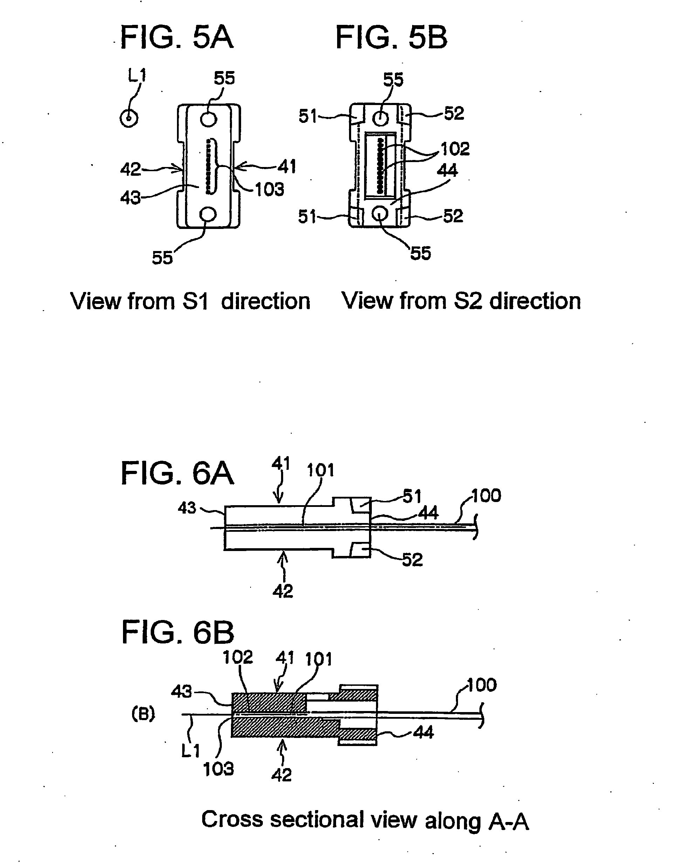

Then, a structural example of the ferrule is described with reference to Figs. 1 to 6. Figs. 1 and 2 depict the side of a first flat portion 41 of the ferrule 20. Fig. 3 depicts the side of a second flat portion 42 of the ferrule 20. Fig. 4 is a plan view of depicting the ferrule 20. Fig. 5A is a side view of the ferrule 20 viewed from a direction of an arrow S1 depicted in Fig. 4. Fig. 5B is a side view of the ferrule 20 viewed from a direction of an arrow S2 depicted in Fig. 4.

Fig. 6A is a side view of the ferrule 20 viewed from a direction of an arrow S3 depicted in Fig. 4. Fig. 6B is a cross sectional view of the ferrule 20 along A-A line depicted in Fig. 4.

The ferrule 20 depicted in Fig. 1 is a flat plate type member which can be inserted into the hollow portion 31 of the plug member 21. The ferrule 20 includes the first flat portion 41, the second flat portion 42, an end face 43 to be butted, and a separate end face 44. The first flat portion 41 is the face in opposite side of the second flat portion 42, and the first flat portion 41 and the second flat portion 42 are in parallel each other. The end face 43 to be butted is located in opposite side of the separate end face 44, and the end face 43 and the separate end face 44 are in parallel each other.

As depicted in Figs. 1 and 2, a recessed portion 51 as a first positioning portion is formed in two corner portions of the first flat portion 41, respectively. In the same manner, as depicted in Figs. 3, a recessed portion 52 as the first positioning portion is formed in the two corner portions of the second flat portion 42, respectively.

The two recessed portions 51, 51 and the two recessed portions 52, 52 are formed in the corresponding positions to the side of the end face 44. In Fig. 4, the two recessed portions 51, 51 are shown, and in Fig. 5, the four recessed portions 51, 52 are shown.

As depicted in Figs. 2 and 6, the end portion 101 of the set of multiple optical fibers 100 is fixed in the ferrule 20 along the center axis L1. As depicted in Fig. 2, the respective end faces 103 of the optical fibers in the set of multiple optical fibers 100 are exposed to the outside at the side of the end face 43 to be butted of the ferrule under the condition of being aligned along x direction. In the set of multiple optical fibers 100, a plurality of optical fibers 102 are arranged in parallel to be formed in a tape shape. Each optical fiber 102 comprises a core and a cladding to cover the outer peripheral of the core.

As depicted in Figs. 3 and 4, the ferrule has tow holes 55, 55 for guiding. The holes 55, 55 for guiding are through holes respectively having circular cross section, which are formed from the end face 43 to be butted through the end face 44 in the opposite side along L1 direction.

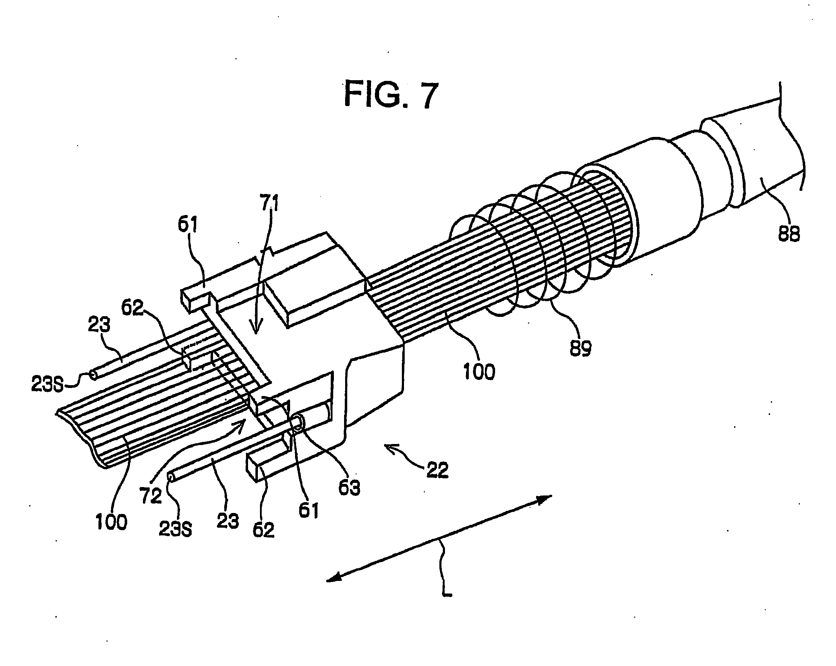

Then, a structure of the spacer 22 depicted in Fig. 1 is described with reference to Figs. 7 to 11.

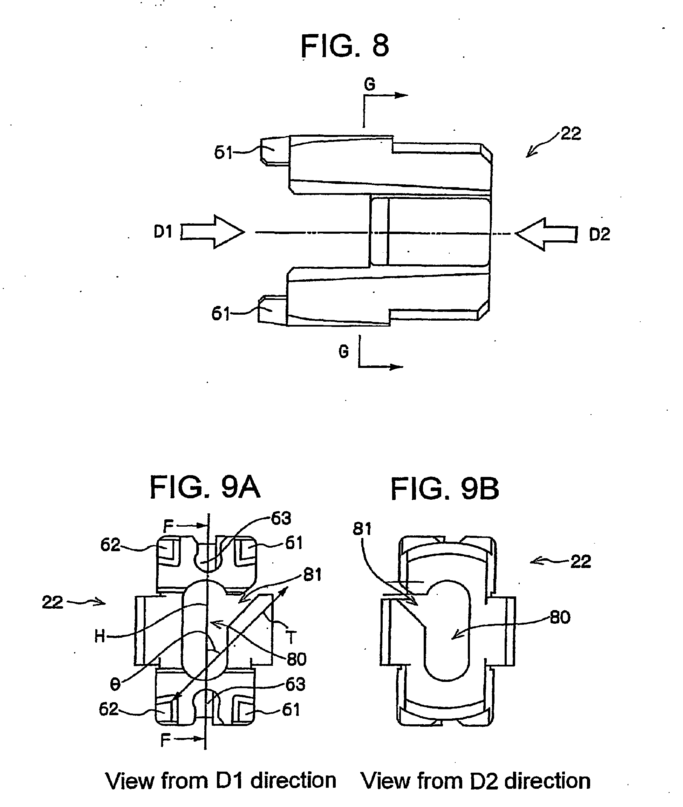

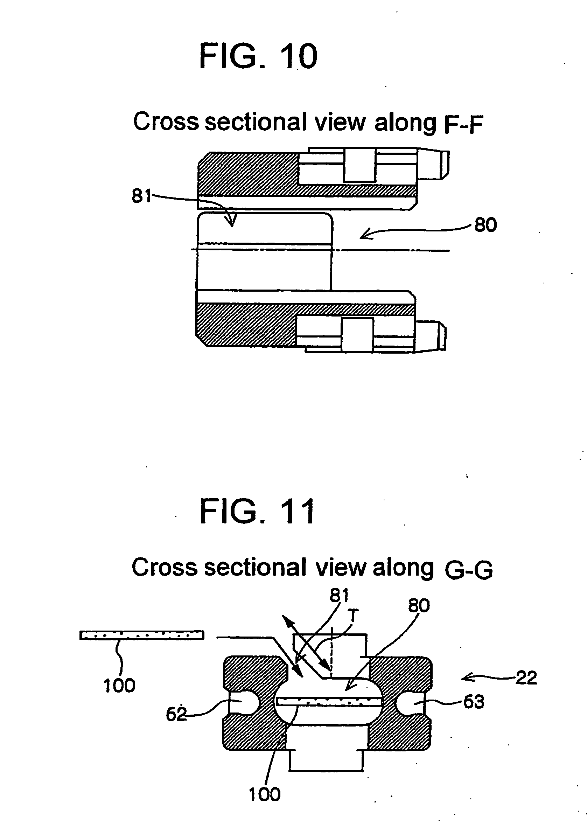

Fig. 7 is a perspective view to show the spacer 22 and the set of multiple optical fibers 100. Fig. 8 is a plan view of the spacer 22. Fig. 9A is a side view of the spacer viewed from D1 direction depicted in Fig. 8. Fig. 9B is a side view of the spacer viewed from D2 direction depicted in Fig. 8. Fig. 10 is a cross sectional view of the spacer 22 along F-F line depicted in Fig. 9A. Fig. 11 is a cross sectional view of the spacer 22 along G-G line depicted in Fig. 8.

As depicted in Fig. 7, the spacer 22 has four projections 61, 62 as a second positioning portion and two pins 23, 23. The pin 23, 23 is respectively a metal round bar, for example, and is arranged to protrude in parallel from the spacer along L direction.

Although the pin 23, 23 is not shown in Figs. 8 to 11, the end portion of the pin 23, 23 is inserted in the hole 63, 63 for attaching as depicted in Figs. 9A and 11 and fixed therein.

As depicted in Fig. 7, two corner portions to the side of a first face portion 71 of the spacer 22 have the projections 61 respectively, and two corner portions to the side of a second face portion 72 of the spacer, which is in the opposite side of the first face portion, have the projections 62 respectively. As depicted in Fig. 2, the two pins 23, 23 are respectively inserted in the holes 55, 55 for guiding which are positioned in the corresponding respective positions in the ferrule 20. As depicted in Fig. 2, each tip portion 23S, 23S of the two pins 23, 23 is protruded from the end face 43 to be butted in the ferrule 20 under the condition in which the spacer 22 and the ferrule 20 are assembled.

As depicted in Fig. 2, the two projections 61, 61 in the spacer 22 are formed to be fit into the respective recessed portions 51, 51 in the corresponding positions in the ferrule 20. In the same manner, the two projections 62, 62 in the spacer 22 are formed to be fit into the respective recessed portions 52, 52 in the corresponding positions in the ferrule 20.

Thus, the spacer 22 and the ferrule 20 are fixed to each other by the use of the two pins 23, 23. In addition, the spacer 22 and the ferrule 20 can be precisely positioned to each other even in two directions X, Y in perpendicular to the longitudinal direction L without displacement by means of the fitting of the four recessed portions 51, 52 and the four projections 61, 62, respectively.

As depicted in Figs. 9 to 11, the spacer 22 has a receiving hole 80 having an approximately elliptical cross section and a multiple optical fiber guiding groove 81. The receiving hole 80 has function to receive a mid-part of the set of multiple optical fibers 100. The multiple optical fibers guiding groove 81 is formed in such manner as to be cut into from the side of an outer peripheral face of the spacer 22 and communicated to the receiving hole 80. Thus, the multiple optical fibers guiding groove 81 is formed to introduce the set of the multiple optical fibers 100 from the outside of the spacer 22 into the receiving hole 80.

According to the above described structure, the mid-part of the set of multiple optical fibers 100 can be easily and surely introduced into the receiving hole 80 from the outside of the spacer 22 through the multiple optical fibers guiding groove 81, and arranged therein. Thus, assembling efficiency of the optical connector is improved.

As depicted in Fig. 9A, the direction T of forming the multiple optical fibers guiding groove 81 slants such that an angle θ between the direction T and the longitudinal direction H of the receiving hole 80 becomes 45 degrees for example. According to the above described feature, as depicted in Fig. 11, the set of multiple optical fibers 100 can be received into the receiving hole 80 through the multiple optical fibers guiding groove 81, and simply and surely arranged along the longitudinal direction H of the multiple optical fibers guiding groove 81.

However, the angle θ is not limited to 45 degrees. The angle can be arbitrarily selected within a range of from 20 degrees to 80 degrees. With the angle under 20 degrees, the set of multiple optical fibers 100 can be hardly guided into the receiving hole 80 through the multiple optical fibers guiding groove 81. With the angle over 80 degrees, even though the set of multiple optical fibers 100 is guided into the receiving hole 80 through the multiple optical fibers guiding groove 81, the set of multiple optical fibers 100 can be hardly received within the receiving hole 80.

As depicted in Fig. 7, a spring is arranged around the set of multiple optical fibers 100 between the spacer 22 and a boot 88.

Then, assembling process of the ferrule 20, the plug member 21 and the spacer 22 of the optical connector is described.

The ferrule 20 as depicted in Fig. 1 is fixed in advance to the end portion 101 of the set of multiple optical fibers 100 by plastic molding. The mid-part of the set of multiple optical fibers 100 is received in the receiving hole 80 through the multiple optical fibers guiding groove 81 of the spacer 22 as depicted in Fig. 1.

As depicted in Figs. 1 and 2, two pins 23, 23 of the spacer 22 are respectively inserted in the holes 55, 55 for guiding correspondingly positioned in the ferrule 20.

As depicted in Fig. 2, the two projections 61, 61 in the spacer 22 are fit into the respective recessed portions 51, 51 in the corresponding positions in the ferrule 20, and the two projections 62, 62 in the spacer 22 are fit into the respective recessed portions 52, 52 in the corresponding positions in the ferrule 20.

The set of multiple optical fibers 100 is placed in advance to run through the hollow portion 31 of the plug member 21, and the integrally assembled spacer 22 and the ferrule 20 are fit into the hollow portion 31 of the plug member 21. Thus, the spacer 22 as depicted in Fig. 1 is fit into the holding member 32 within the plug member 21 and fixed therein.

According to the above described feature, the ferrule 20 can be simply and surely held with high precision within the plug member through the spacer 22. The spacer 22 and the ferrule 20 are fixed each other by the use of the two pins 23, 23 without displacement in L1 direction. The spacer 22 and the ferrule 20 can be precisely positioned each other without displacement in two directions X, Y in perpendicular to the longitudinal direction L by means of the fitting of the four recessed portions 51, 52 and the four projections 61, 62, respectively, thus improving the assembling efficiency of the optical connector.

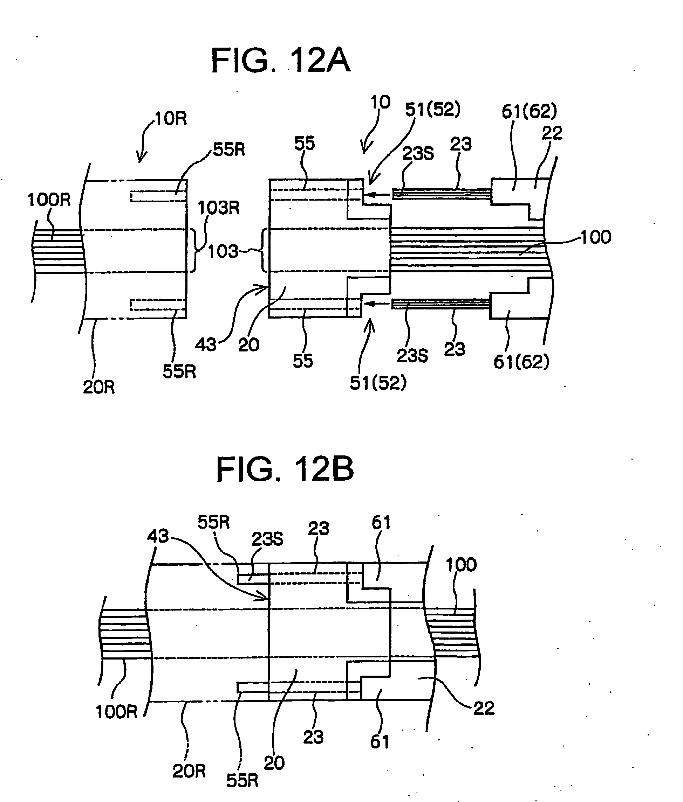

Fig. 12 shows an example in which the end face 103 of each of the optical fiber in the set of multiple optical fibers 100 of the optical connector 10 is butted to the end face 103R of each of the optical fiber in the set of multiple optical fibers 100R of the opposing optical connector 10R and positioned thereto.

The ferrule 20R of the opposing optical connector 10R has the holes 55R, 55R for guiding, and each tip end portion 23S, 23S of the respective pins 23, 23 protrudes from the end face 43 to be butted in the ferrule 20. Accordingly, each tip end portion 23S, 23S is fit into the respective holes 55R, 55R for guiding so that the ferrule 20 of one side and the ferrule 20R of the other side can be positioned each other. Thus, the end face 103 of each of the optical fiber in the set of multiple optical fibers 100 of the optical connector 10 can be precisely butted and positioned to the end face 103R of each of the optical fiber in the set of multiple optical fibers 100R of the optical connector 10R.

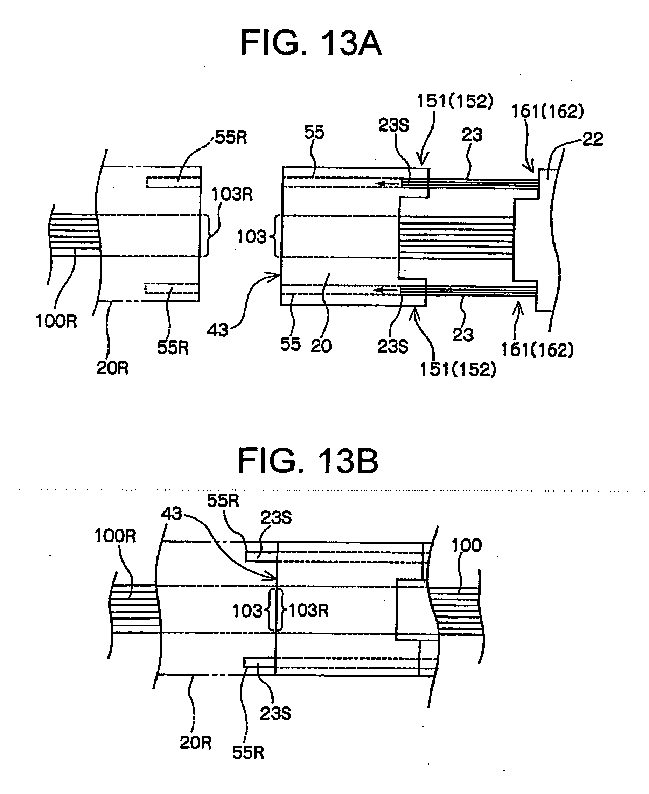

Fig. 13 shows a comparative embodiment of an optical connector. The embodiment as depicted in Fig. 13 is described with the use of the description in the embodiment as depicted in Fig. 12 in which the same reference numeral is given to the same portion. The ferrule 20 as depicted in Fig. 13 has four projections 151, 152 as the first positioning portion, and the spacer 22 as depicted in Fig. 13 has four recessed portions 161, 162 as the second positioning portion.

The present invention can be applied to various modified examples without limiting to the above described embodiments. For example, in the illustrated examples, the spacer 22 has four second positioning portions, and the ferrule 20 has four first positioning portions as depicted in Fig. 1. However, not limited to the above, the spacer may have two, three or more than five second positioning portions, and the ferrule 20 may have two, three or more than five first positioning portions

According to the optical connector of the invention, the ferrule can be simply and surely held within the plug member with high precision.

## Claims

1. An optical connector (10) for connecting two sets of multiple optical fibers (100), which includes:
a ferrule (20) to secure said set of multiple optical fibers (100);
a plug member (21) to hold said ferrule (20); and
a spacer (22) having a pin (23) for guiding, said spacer (22) being fixed to said ferrule (20) by inserting the pin (23) into said ferrule (20) to be secured together with said ferrule (20) within said plug member (21),
**characterized in that**,
said ferrule (50) is a flat plate type member having a first flat portion (41) and a second flat portion (42), wherein the first flat portion (41) is the face in opposite side of the second flat portion (42) and the first flat portion (41) and the second flat portion (42) are in parallel each other,
a recessed portion (51) is formed in two corner portions of the first flat portion (41) and a recessed portion (52) is formed in two corner portions of the second flat portion (42),
said spacer (22) has projections (61, 62) in its corner portions which are fitted to the recessed positioning portions (51, 52) of the first and second flat portions (41, 42) of the ferrule (50) to position said ferrule (50) to said spacer (22),
said spacer further includes a receiving hole (80) for receiving said set of multiple optical fibers, and a multiple optical fibers guiding groove (81) for guiding said set of multiple optical fibers into said receiving hole from outside of said spacer.

2. The optical connector according to claim 1, wherein a direction (T) of forming said multiple optical fibers guiding groove (81) slants to a longitudinal direction (H) of said receiving hole (80).

## Patentansprüche

1. Optischer Anschluss (10) zum Verbinden zweier Sätze von Vielfachlichtleitern (100), welcher umfasst:
eine Hülse (20) zum Sichern des Satzes von Vielfachlichtleitern (100);
ein Steckelement (21) zum Halten der Hülse (20); und
einen Abstandhalter (22) mit einem Stift (23) zum Führen, wobei der Abstandhalter (22) an der Hülse (20) befestigt ist, indem der Stift (23) in die Hülse (20) eingesteckt ist, um gemeinsam mit der Hülse (20) in dem Steckelement (21) gesichert zu sein,
**dadurch gekennzeichnet,**
**dass** die Hülse (50) ein flaches scheibenartiges Element mit einem ersten flachen Abschnitt (41) und einem zweiten flachen Abschnitt (42) ist, wobei der erste flache Abschnitt (41) die dem zweiten flachen Abschnitt (42) abgewandte Fläche ist und der erste flache Abschnitt (41) und der zweite flache Abschnitt (42) parallel zueinander sind,
ein vertiefter Abschnitt (51) in zwei Eckabschnitten des ersten flachen Abschnitts (41) ausgebildet ist und ein vertiefter Abschnitt (52) in zwei Eckabschnitten des zweiten flachen Abschnitts (42) ausgebildet ist,
der Abstandhalter (22) in seinen Eckabschnitten Vorsprünge (61, 62) aufweist,
die an den vertieften Positionierabschnitten (51, 52) der ersten und zweiten flachen Abschnitte (41, 42) der Hülse (50) zum Positionieren der Hülse (50) an dem Abstandhalter (22) angebracht sind,
der Abstandhalter weiterhin eine Aufnahmeöffnung (80) zum Aufnehmen des Satzes von Vielfachlichtleitern und eine Führungsnut (81) für die Vielfachlichtleiter zum Führen der Vielfachlichtleiter von außerhalb des Abstandhalters in die Aufnahmeöffnung.

2. Optischer Anschluss nach Anspruch 1,
wobei eine Richtung (T) des Ausbildens der Führungsnut (81) für die Vielfachlichtleiter sich zu einer Längsrichtung (H) der Aufnahmeöffnung (80) neigt.

## Revendications

1. Connecteur optique (10) pour connecter deux blocs de fibres optiques multiples (100), comprenant :
une virole (20) pour sécuriser ledit bloc de fibres optiques multiples (100) ;
un élément de fiche (21) pour tenir ladite virole (20) ; et
une entretoise (22) ayant une broche (23) pour guidage, ladite entretoise (22) étant fixé à ladite virole (20) par insérer la broche (23) dans ladite virole (20) pour être sécurisée avec ladite virole (20) dans ledit élément de fiche (21),
**caractérisé en ce que**
ladite virole (50) est un élément plat de type de plaque ayant une première partie plate (41) et une deuxième partie plate (42), dans lequel la première partie plate (41) est la surface opposée de la deuxième partie plate (42) et la première partie plate (41) et la deuxième partie plate (42) sont parallèles l'une à l'autre,
une partie évidée (51) est formée dans deux parties de coin de la première partie plate (41) et une partie évidée est formée dans deux parties de coin de la deuxième partie plate (42),
ladite entretoise (22) a des projections (61, 62) dans ses parties de coin qui sont installées aux parties évidées de positionnement (51, 52) des premières et
deuxièmes parties plates (41, 42) de la virole (50) en vue de positionner ladite virole (50) à ladite entretoise (22),
ladite entretoise comprend en outre une ouverture de réception (80) pour recevoir ledit bloc de fibres optiques multiples, et une rainure de guidage (81) de fibres optiques multiples pour guider ledit bloc de fibres optiques multiples de l'extérieur de ladite entretoise dans ladite ouverture de réception.

2. Connecteur optique selon la revendication 1,
dans lequel une direction (T) de former ladite rainure de guidage (81) de fibres optiques multiples est inclinée vers une direction longitudinale (H) de ladite ouverture de réception (80).
